# EUROPÄISCHE PATENTSCHRIFT

(11) **EP 3 297 801 B1**
(45) Veröffentlichungstag und Bekanntmachung des Hinweises auf die Patenterteilung: **20.11.2024**
(21) Anmeldenummer: 16729064.2
(22) Anmeldetag: 18.05.2016
(51) Int. Cl.: B28B 1/24, B28B 7/42, F24S 23/71

(54) **VERFAHREN ZUM HERSTELLEN EINES MASSHALTIGEN BETONWERKSTÜCKS UND MASSHALTIGE BETONWERKSTÜCKE**
METHOD FOR PRODUCING A DIMENSIONALLY STABLE CONCRETE WORKPIECE AND DIMENSIONALLY STABLE CONCRETE WORKPIECE
PROCÉDÉ DE FABRICATION D'UNE PIÈCE DE BÉTON DIMENSIONNELLEMENT STABLE ET PIÈCE DE BÉTON DIMENSIONNELLEMENT STABLE

(30) Priorität: 18.05.2015 CH 6812015
(43) Veröffentlichungstag der Anmeldung: 28.03.2018
(73) Patentinhaber: Synrocks SA, 6900 Lugano (CH)
(72) Erfinder: MARTINOLA, Giovanni, 8107 Buchs (CH); PEDRETTI-RODI, Andrea, 6500 Bellinzona (CH)
(74) Vertreter: Stump, Beat
(86) Internationale Anmeldenummer: PCT/IB2016/052910
(87) Internationale Veröffentlichungsnummer: WO 2016/193848

(56) Entgegenhaltungen:
- EP-A1- 1 911 733
- EP-A1- 1 911 733
- EP-A2- 2 436 852
- EP-A2- 2 436 852
- BE-A3- 1 019 894
- BE-A3- 1 019 894
- DE-A1- 3 133 906
- DE-A1- 3 133 906
- US-A- 4 059 376
- US-A- 4 059 376
- US-A- 4 234 534
- US-A- 4 234 534
- US-A- 4 234 534
- US-A- 4 750 827
- US-A- 4 750 827

## Beschreibung

Die Erfindung betrifft ein Verfahren zum Herstellen eines masshaltigen Betonwerkstücks nach dem Oberbegriff von Anspruch 1, sowie Betonwerkstücke nach dem Oberbegriff der Ansprüche 11 und 13.

Beton wird verbreitet eingesetzt, hat jedoch auch ungünstige Eigenschaften, wie beispielsweise eine geringe Zugfestigkeit, welche Gegenstand einer intensiven Weiterentwicklung sind und häufig auch in grösseren oder kleineren Schritten verbessert werden.

Im Allgemeinen wird jedoch bis heute in Kauf genommen, dass Betonwerkstücke wenig masshaltig sind. So ist es auf dem Bau normal, Betonwerkstücke vorzusehen, deren Toleranz im Bereich eines Millimeters pro Meter Länge (Abweichung von +/- 0,5 mm von der Sollänge) beträgt. Dies ist beispielsweise auch bei Fensterbrüstungen der Fall, wobei allfällige Spalte einfach mit einer Metallverkleidung abgedeckt werden.

Durch die fortschreitende Verbesserung der Festigkeitseigenschaften des Betons eröffnet sich grundsätzlich eine breitere Verwendung, wobei dann auch die Geometrie der Betonwerkstücke zunehmend der vorgesehenen Beanspruchung angepasst, d.h. komplizierter wird, um die verbesserten Festigkeitseigenschaften zu nutzen. Dann wiederum ist die geringe Genauigkeit der entsprechenden Betonwerkstücke nachteilig. Die US 4 234 534 offenbart ein Verfahren zur Herstellung von Beton in Formen, mit einer vorbestimmten Temperaturverteilung, wobei Toleranzen im Bereich von 2,9 × 10⁻⁴ m pro Meter der Werkstückabmessung erreicht werden, wobei noch kleinere Toleranzen wünschenswert sind.

Entsprechend ist es die Aufgabe der vorliegenden Erfindung, ein Verfahren zur Herstellung von masshaltigen Betonwerkstücken bzw. masshaltige Betonwerkstücke bereit zu stellen.

Die Aufgabe wird gelöst durch ein Verfahren mit den kennzeichnenden Merkmalen von Anspruch 1 und durch Betonwerkstücke mit den kennzeichnenden Merkmalen gemäss den Ansprüchen 11 und 13.

Dadurch, dass während der Hydratation des Frischbetons eine vorbestimmte Temperaturverteilung in den Wänden der Form gefahren wird, kann die Hydratation des Frischbetons kontrolliert werden, die einerseits durch dem Frischbeton zugeführte und dann auch durch die von ihr selbst erzeugte Wärme beschleunigt aber auch durch aus dem Frischbeton abgeführte Wärme verlangsamt werden kann. Dies hat zur Folge, dass durch die Hydratation und Wärmeexpansion bedingte Volumenänderungen sowie hydratationsbedingte Gefügeänderungen beherrschbar werden, und damit die im hydratisierenden Beton laufend erzeugten geometrischen Verzerrungen sowie die damit einher gehenden Spannungen unter der Schwelle bleiben, oberhalb welcher im hydratisierenden Beton Fehlstellen entstehen, die dann bis zur vollständigen Hydratation nicht mehr geheilt werden und die Masshaltigkeit und auch die Festigkeit des Betonwerkstücks reduzieren. Dadurch, dass eine vollverschlossene Form vollständig mit Frischbeton verfüllt wird, ist die gesamte Oberfläche des Frischbetons mit der Form in Kontakt, was erlaubt, die Hydratation über den ganzen Körper des Betonwerkstücks zu kontrollieren. Eine Druckfestigkeit von 10 MPa vor der Entschalung des Betonwerkstücks stellt sicher, dass dieses während der Entschalung nicht mechanisch beschädigt wird, so dass dann die vorher vermiedenen Fehlstellen durch die Entformung nicht noch bei der Entschalung entstehen. Schliesslich führt die Begrenzung des Durchmessers des Grösstkorns dazu, dass der Wärmetransport durch den hydratisierenden Frischbeton nicht gestört wird, was sonst zu einer chaotischen Temperaturverteilung führt, die beim hydratisieren geometrische Verzerrungen, entsprechende Spannungen und damit die Masshaltigkeit stören.

Lässt sich vermeiden, dass während der Hydratation solche geometrische Verzerrungen entstehen, ergibt sich ein masshaltiges Werkstück, welches hohen Ansprüchen genügt und auch in der Festigkeit nicht reduziert ist. Insbesondere können auch masshaltige Serienteile erfindungsgemäss produziert werden, die in einer vorbestimmten Geometrie je eine Toleranz von nur +/- 25 Mikrometer pro Meter Länge des Werkstücks aufweisen.

An dieser Stelle sei angemerkt, dass für die Untersuchung des sich aufbauenden E-Moduls im hydratisierenden Beton Versuchsanordnungen bekannt geworden sind, die den hydratisierenden Beton auf konstanter Temperatur halten, wobei jedoch laufend durch mechanische Einwirkung auf den Beton dessen E-Modul gemessen wird, was diesen nicht ungestört lässt, sondern zu geometrischen Verzerrungen des Betons führt. Durch die konstante Temperatur wird die Auswertung des über den E-Modul erkannten Verlaufs der Hydratisierung erleichtert, da dann die dem Fachmann bekannte Äquivalenzrechnung für den Zeitablauf entfällt, weil die Hydratisierung durch die erzeugte Eigenwärme unterschiedlich schnell fortschreitet (Claude Boulay et al: How to monitor the modulus of elasticity of concrete, automatically since the earliest age?, Materials and Structures (2014) 47:141-155).

Dadurch, dass der Kessel für das Vergiessen von Frischbeton so ausgebildet ist, die Fliessgeschwindigkeit des austretenden Frischbetons verändern zu können, kann die Füllgeschwindigkeit der Form, in welche der Frischbeton gegossen wird, über ihre Querschnittsveränderungen beispielsweise konstant gehalten oder auch den Querschnitt angepasst werden. Damit wird verhindert, dass in Querschnittsverengungen die Füllgeschwindigkeit so hoch wird, dass beispielsweise luftgefüllte Taschen zurückbleiben, welche wiederum den Kontakt der temperaturgesteuerten Wände der Form mit dem Frischbeton verhindern. Mit anderen Worten ist im Fall von luftgefüllten Taschen die Form nicht vollständig mit Frischbeton verfüllt, so dass zusätzlich zur fehlerhaften Kontur des Werkstücks die Hydratisierung wenigstens lokal, im Bereich der Taschen, nicht kontrolliert werden kann und damit schädliche geometrische Verzerrungen im hydratisierenden Beton entstehen können. Weitere vorteilhafte Effekte einer konstanten oder angepassten Füllgeschwindigkeit liegen beispielsweise beim faserverstärkten Beton darin, dass die für die Festigkeit des Betons gewünschte (in der Regel aleatorische) Ausrichtung der Fasern nicht gestört wird, wie es der Fall sein kann, wenn in Querschnittsverengungen durch zu hohe Füllgeschwindigkeit Turbulenzen entstehen.

Dadurch, dass ein erfindungsgemässes Betonwerkstück eine Toleranz von 50 Mikrometer pro Meter (Abweichung von +/- 25 Mikrometer pro Meter Länge des Werkstücks vom Sollmass) aufweist, ist es in Bereichen einsetzbar, die bisher durch Betonwerkstücke nicht abgedeckt werden konnte. Einmal im Sinn von Einzelteilen, dann aber auch als Serienteile, die alle massgenau ausgebildet sind und entsprechende Bauweisen ermöglichen. Dazu gehört auch (neben zahllosen anderen Anwendungen) die Anwendung im Bereich der Konzentratoren für Solarkollektoren, beispielsweise für die Herstellung einer Facette in einem Dish - Kollektor, welche aus einem Träger mit einer parabolischen Oberfläche und einer auf der parabolischen Oberfläche direkt oder indirekt aufliegenden reflektierenden Schicht besteht, wobei die reflektierende Schicht die Kontur der parabolischen Oberfläche des Trägers übernimmt. Erfindungsgemäss lässt sich dabei ein Brennbereich von 10 mrad oder weniger erzeugen, bis zu 1 mrad oder sogar noch weniger, was für hohe Konzentrationen des Sonnenlichts genügt.

Ausbildung als parabolischer Träger für eine reflektierende Schicht für einen Solarkollektor, wie dies nachstehend beschrieben ist.

Die Erfindung wird nachstehend anhand der Figuren noch etwas näher beschrieben.
- Figur 1: ein Dish - Kollektor gemäss dem Stand der Technik mit einer Anzahl Facetten, welche Strahlung auf einen Absorber konzentrieren,
- Figur 2a: ein Ausführungsbeispiel eines erfindungsgemäss hergestellten Betonträgers für eine Facette eines Kollektors in einer Ansicht von oben,
- Figur 2b: den Betonträger von Figur 2a von der Seite und von unten,
- Figur 3a: eine zweiteilige, vollverschlossene Form für die Herstellung des Betonträgers von Figur 2a,
- Figur 3b: die Form von Figur 3a in geschlossenem Zustand in einer Ansicht von oben auf das an der oberen Formhälfte angeordnete Kühlmodul, und
- Figur 4: einen erfindungsgemässen Kessel für die Vergiessen von Frischbeton in eine Form

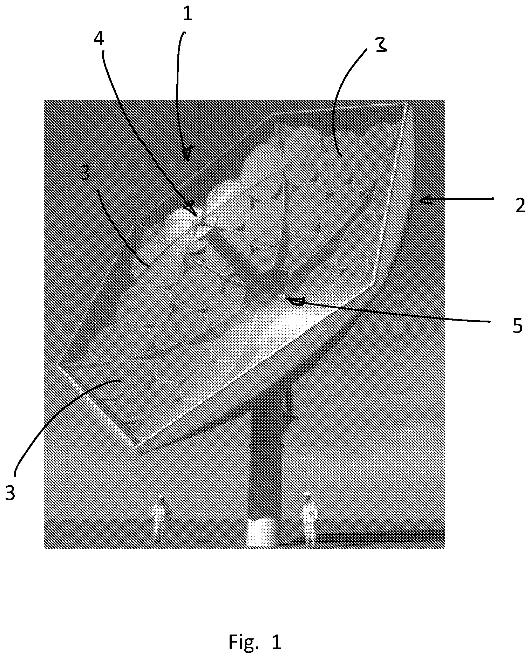

Figur 1 zeigt einen Dish - Kollektor 1 gemäss dem Stand der Technik, der gemäss der WO 2011/072410 ausgebildet ist. Ein paraboloider Konzentrator 2 wird aus einzelnen Facetten 3 zusammengesetzt, welche je Sonnenlicht auf einen Absorber 4 reflektieren, der im Brennpunkt des paraboloiden Konzentrators 2 angeordnet ist. Damit sind die Facetten 3 selbst nicht Paraboloide, sie bilden einen lokalen Bereich des Paraboloids des Konzentrators 2, womit die Geometrie der reflektierende Oberfläche der Facetten 3 je nach ihrem Abstand vom Scheitelpunkt 5 des paraboloiden Konzentrators 2 eine andere ist. Solche Facetten 3 werden hier paraboloidisch genannt, sie bilden in der Summe, wie erwähnt, ein Paraboloid.

Die reflektierende Oberfläche der Facetten 3 wird durch eine druckbelastete, mit Aluminium bedampfte, in einer Überdruckkammer angeordnete, flexible Membran gebildet, welche auf Grund des ovalen Umrisses der Facette 3 und ihrer Druckbelastung die lokale Krümmung des Paraboloids 2 nachbildet. Jede Facette 3 ist damit Teil des paraboloiden Konzentrators 2 und damit Teil eines Paraboloids, in dessen Brennpunkt der Absorber 4 liegt. Durch solch eine Anordnung lassen sich Konzentrationen des Sonnenlichts von über 1000, bis 3000 oder mehr erreichen.

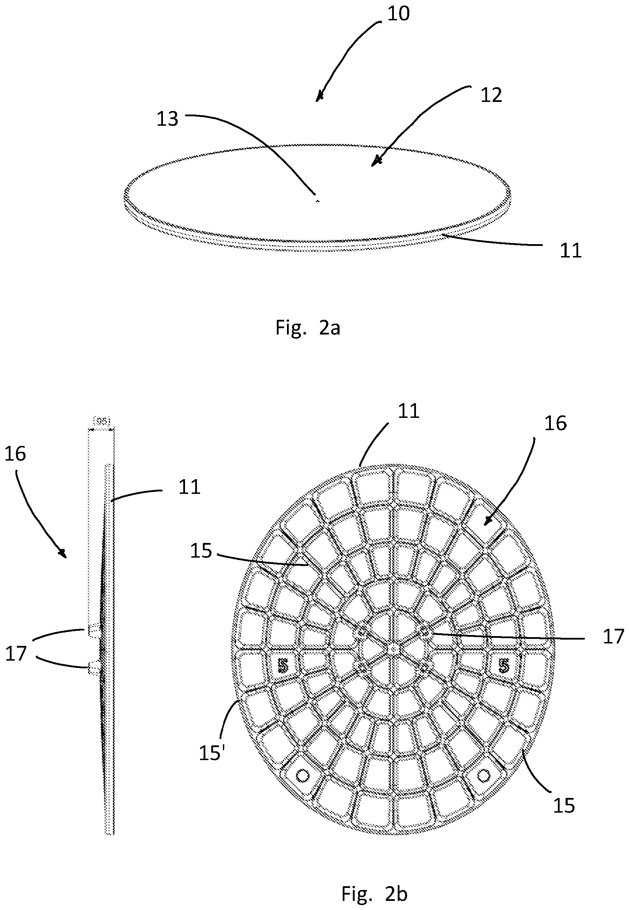

Figur 2a zeigt einen erfindungsgemässen, scheibenförmig ausgebildeten und einen Umfang 11 aufweisenden Betonträger 10 für eine reflektierende, zur Entlastung der Figur weggelassene Schicht, wobei der Betonträger 10 und die reflektierende Schicht eine Facette für einen Dish - Kollektor nach Figur 1 bilden. Solch eine reflektierende Schicht kann durch eine reflektierende Folie, wie eine Aluminium bedampfte PET - Folie, gebildet werden oder durch eine andere Membran, wie beispielsweise ein dünnes Aluminiumblech. Die reflektierende Schicht wird direkt auf die paraboloidisch ausgebildete Oberfläche 12 des Betonträgers 10 aufgelegt und im Betrieb beispielsweise durch den Umgebungsdruck an die Oberfläche 12 angepresst, da der Zwischenraum zwischen der Oberfläche 11 und der reflektierenden Schicht über einen Unterdruckkanal 13 evakuiert ist. In einer konkreten Ausführungsform misst die Hauptachse des ovalen Betonträgers 10 1379 mm, die Nebenachse 1196 mm, der Ort des Absorbers 4 (Figur 1) befindet sich in einem Abstand von mehreren Metern zur Mündung des Unterdruckkanals 11.

Es ergibt sich, dass die paraboloidisch ausgebildete Oberfläche 12 hohe Präzision, d.h. geringe Toleranzen aufweist, sonst währen die oben geforderten Konzentrationen nicht erreichbar.

Figur 2b zeigt den Betonträger 10 von Figur 2a einmal von der Seite und dann von unten, wobei in der Ansicht von unten die filigrane Rippenstruktur mit Rippen 15 der Unterseite 16 ersichtlich ist, ebenso Trägerzapfen 17 für die Anordnung des Betonträgers 10 in einem Gestell eines Dish - Kollektors. Der Umfang 11 wird durch die Aussenseite einer umlaufenden Rippe 15' gebildet.

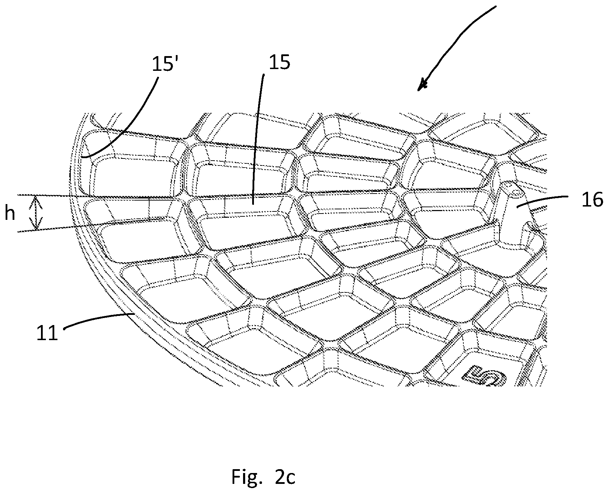

Figur 2c zeigt vergrössert einen Abschnitt des Betonträgers 10, wiederum von unten, zur Verdeutlichung der Rippenstruktur und der damit verbundenen Toleranzen der Abmessungen, insbesondere der Abmessungen der Oberfläche 12 (Figur 2a):
Die Masstoleranzen des nach dem erfindungsgemässen Verfahren hergestellten Betonträgers betragen wie erwähnt 0,05 mm pro m, was bei einer Höhe h der Rippen 15 an der Aussenseite des Betonträgers 10 von hier 40 mm eine Abweichung der Oberfläche 11 von ihrer Sollabmessung von nur +/- 0,001 mm ausmacht. Es ist mit anderen Worten so, dass der Betonträger 10 nach seiner Entschalung ohne Nachbearbeitung eine hochpräzise Oberfläche 12 aufweist, deren Genauigkeit einen geometrischen Brennfleck für die Reflektierte Strahlung von bis zu 1 mrad ermöglicht. "Geometrischer Brennfleck" darum, weil die Beton-Oberfläche 12 selbst zu wenig reflektierend ist und darum mit einer reflektierenden Schicht bedeckt werden muss, s. die Beschreibung oben. Dabei verleiht aber die Oberfläche 12 der reflektierenden Schicht ihre Kontur - so dass die reflektierende Schicht im Betrieb einen Brennfleck erzielt, der im Wesentlichen dem geometrischen Brennfleck der Oberfläche 12 mit einem Durchmesser von bis zu nur 1 mrad entspricht.

Es ergibt sich eine einfache, robuste und kostengünstige Konstruktion und Herstellung für ein wegen der schwierigen paraboloiden Form komplexes Bauteil, dass im Stand der Technik nur schwierig und unter vergleichsweise hohen Kosten herstellbar ist.

Der in den Figuren 2a bis 2c gezeigte Betonträger 10 ist nur ein Beispiel für ein nach dem erfindungsgemässen Verfahren herstellbares Betonwerkstück. Ein anderes (unter vielen) Ausführungsbeispiel bilden Betonfundamente für Werkzeugmaschinen oder Bearbeitungszentren, die im Mikrometerbereich hochpräzis arbeiten, wobei je nach der Bearbeitung erhebliche Kräfte am Werkzeug bzw. am Werkstück wirken; zudem können die Werkstücke selbst ein Gewicht von mehreren Tonnen erreichen. Hier werden stabile Fundamente mit hochpräziser Oberfläche benötigt, da die Maschinengestelle im Mikrometerbereich präzis aufgestellt werden müssen, um die geforderte Genauigkeit in der Bearbeitung der Werkstücke realisieren zu können.

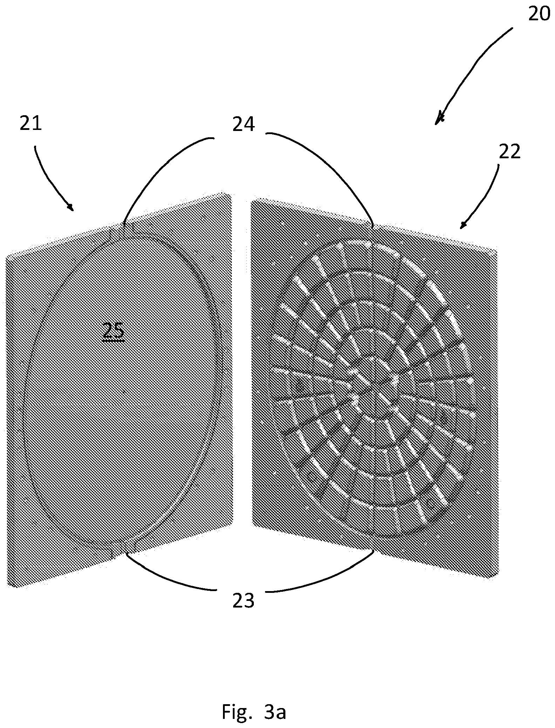

Figur 3a zeigt eine Form 20 zur Ausführung des erfindungsgemässen Verfahrens, die eine obere Hälfte 21 für die Formgebung der Oberfläche 12 (für die Auflage der reflektierenden Schicht, s. Figur 2a) und einer untere Hälfte 22 für die Rippenstruktur (s. Figur 2b) aufweist. Die Wandfläche 25 für die Ausbildung der Oberfläche 12 des Betonwerkstücks 10 (Figur 2a) ist masshaltig, d.h. besitzt eine Toleranz die gleich oder bevorzugt kleiner ist als die durch das erfindungsgemässe Verfahren im fertigen Betonträger 10 erreichbare Toleranz. Die Wandflächen der unteren Hälfte 22 für die Ausbildung der Rippenstruktur (Figur 2b,c) können eine grössere Toleranz aufweisen, da die Masshaltigkeit der Rippen 15 als solche nicht von Belang ist für den vorgesehenen Einsatz des Betonträgers 10. Mit anderen Worten ist es so, dass die Form 20 in einer vorbestimmten Geometrie masshaltig ist, und erfindungsgemäss in den anderen Bereichen ebenfalls masshaltig sein kann oder nicht.

Ersichtlich sind ein Zuführkanal 23 für den Frischbeton sowie ein Auslasskanal 24 für die beim Giessen entweichende Luft und für den am Schluss nach dem vollständigen Verfüllen der Form austretenden Frischbeton. Die Form 20 ist vollverschlossen, d.h. das zu giessende Betonwerkstück ist allseitig umschlossen, seine gesamte Oberfläche befindet sich in Kontakt mit den Wänden der Form, ohne Zutritt der Umgebungsluft.

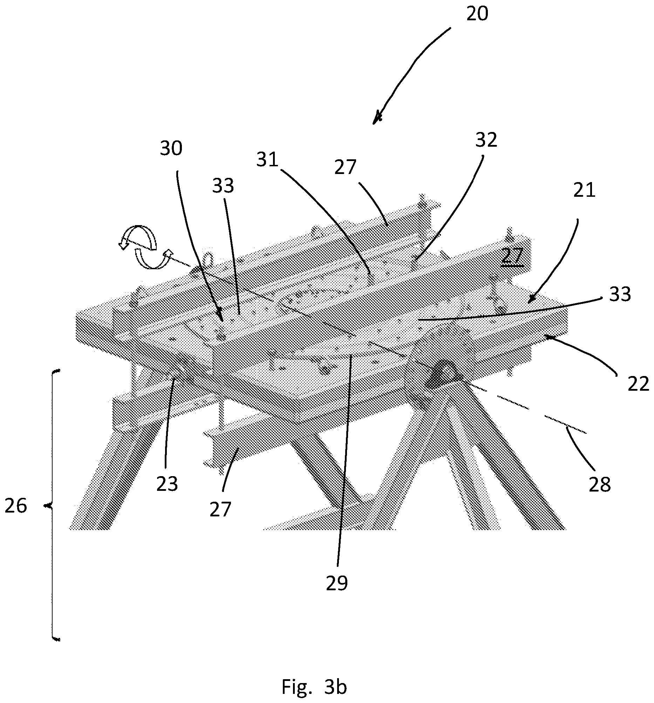

Figur 3b zeigt die geschlossene, betriebsbereite Form 20, die auf einem Metallgestell 26 gelagert ist, dessen unterer, auf dem Boden stehender Teil aber zur Entlastung der Figur abgeschnitten ist. Die beiden Formhälften 21,22 sind zwischen Metallträgern 27 eingespannt, die Form 20 ist verschlossen. Die gestrichelte Linie markiert eine Drehachse 28, um welche die Form verkippt werden kann, so dass sie aus der gezeigten horizontalen Lage in eine vertikale Lage gekippt werden kann.

Die obere Formhälfte 21 besitzt eine ringförmige Ausnehmung 29, in welche ein gegengleich geformtes, ringförmiges Temperaturmodul 30 eingelassen ist, welches sich bei der gezeigten Ausführungsform im Wesentlichen über die Abmessungen des zu giessenden Betonträgers 10 (Figuren 2a bis 2c) erstreckt und einen Einlass 31 sowie einen Auslass 32 für ein Wärmetauschermedium, hier Wasser besitzt. Einlass 31 und Auslass 32 sind über einen ringförmig im Temperaturmodul 30 verlegten Wärmetausch - Kanal 33 verbunden, so dass über im Wärmetausch - Kanal 33 zirkulierendes Wasser die obere Formhälfte wenigstens im Bereich des zu vergiessenden Betonträgers 10 auf einer vorbestimmten Temperatur gefahren werden kann, sei dies einem Temperaturprofil entlang oder sei dies auf einer vorbestimmt konstanten Temperatur. Das Temperaturmodul 30 ist soweit transparent gezeichnet, dass der Verlauf des Wärmetausch - Kanals 33 ersichtlich ist.

In der Figur nicht ersichtlich ist, dass die untere Formhälfte 22 natürlich ebenfalls mit einem Temperaturmodul versehen ist, welches in seiner Ausbildung dem Temperaturmodul 30 entspricht, so dass beide Formhälften 21,22 gleichermassen durch zirkulierendes Wasser erwärmt bzw. gekühlt werden können.

Zur Entlastung der Figur ist eine mit dem Einlass 31 und dem Auslass 32 verbundene Kühlungs- und/oder Heizeinheit für das zirkulierende Wärmetauschermedium weggelassen. Diese kann konventionell aufgebaut sein und wird durch den Fachmann dem konkreten Fall entsprechend ausgelegt. Im Fall einer Heizeinheit besitzt deshalb die Form 20 eine Heizanordnung für die Kontaktflächen des in sie vergossenen Frischbetons, die bevorzugt als Flüssigkeitsheizung, besonders bevorzugt als Wasserheizung ausgebildet ist.

Es ergibt sich, dass die Form 20 über das Temperaturmodul 30 gekühlt und auch erwärmt werden kann, je nach der Temperatur des zirkulierenden Wärmetauschermediums, das Temperaturmodul 30 deshalb auch als Heizanordnung wirken kann,

Bevorzugt besteht die Form 20 aus Aluminium, kann jedoch besonders bevorzugt auch aus einer Aluminium - Silizium Legierung bestehen, welche im Wesentlichen denselben Wärmedehnungskoeffizienten α_{T} wie der in sie zu vergiessende Beton aufweist. Dann kann für die Hydratation des Betons ein Temperaturprofil gefahren werden, ohne dass sich thermisch bedingte Volumenunterschiede zwischen dem Beton und der Form ergeben, welche den Kontakt des Betons mit den Wänden der Form in irgend einer Phase der Hydratation unerwünscht beeinträchtigen.

Da der Wärmedehnungskoeffizient α_{T} des zu vergiessenden Betons je nach dessen jeweiliger Zusammensetzung ändert, kann der Fachmann im konkreten Fall die Koeffizienten α_{T} von Beton und Form abstimmen. Ein häufiger Bereich für α_{T} für Frischbeton liegt zwischen 6 × 10⁻⁶/*K* und 20 × 10⁻⁶/*K*, bevorzugt zwischen 6 × 10⁻⁶/*K* und 18 × 10⁻⁶/*K*, besonders bevorzugt für Faserbetone zwischen 6 × 10⁻⁶/*K* und 14 × 10⁻⁶/*K*. Entsprechend ist es sinnvoll, eine Form für die Hydratation von in sie vergossenem Frischbeton mit einem Wärmedehnungskoeffizienten α_{T} in den genannten Bereichen vorzusehen.

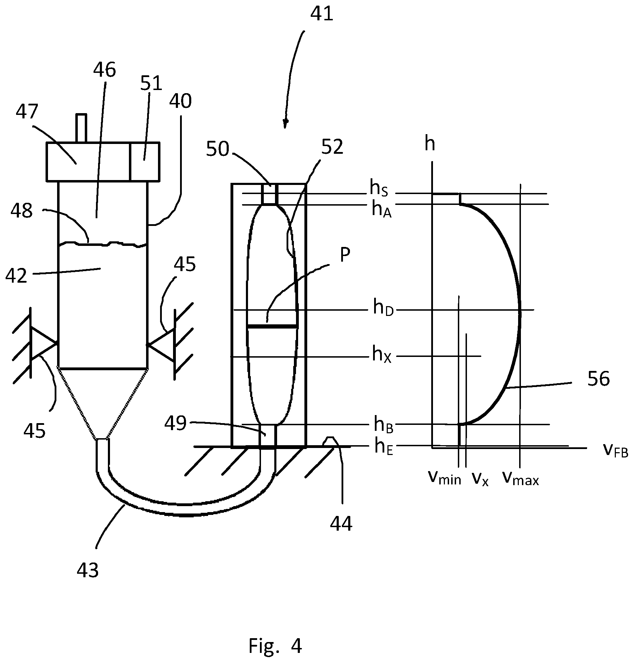

Figur 4 zeigt einen Kessel 40 für das Vergiessen von Frischbeton in eine Form 41, für die Herstellung eines in der gezeigten Ausführungsform im Querschnitt linsenförmigen Objekts. Die Form 41 ändert entsprechend ihren Querschnitt, ist bevorzugt analog aufgebaut wie die Form 20 (Figuren 3a und 3b), und ist hier in eine vertikale Position gebracht, in welcher sie mit über einen hier als Leitung 43 ausgebildeten Ausgabekanal des Kessels 40 mit Frischbeton 42 verfüllt wird. Über eine symbolisch dargestellte Abstützung 44 ist die Form 41 analog zur Form 20 (Figur 3b) gelagert. Der Kessel 41 enthält wenigstens eine Charge Frischbeton 42, nämlich so viel, wie notwendig ist, um die Form 41 vollständig zu füllen. Zur Entlastung der Figur ist ein Temperaturmodul 30 (Figur 3b) oder eine ähnliche Anordnung zur Kontrolle der Temperatur weggelassen.

Der Kessel 40 ist auf den symbolisch dargestellten Stützen 45 gelagert und besitzt eine Überdruckzone 46 in welcher vorzugsweise über Luftdruck, erzeugt durch einen als Kompressor 47, ein Druck auf die Oberfläche 48 des Frischbetons 42 ausgeübt werden kann, wodurch der Frischbeton 42 durch die Leitung 43 via deren Einlass 49 in die Form 41 injiziert wird, wobei laufend die in der Form 41 enthaltene, vom Frischbeton 42 verdrängte Luft durch den Auslass 50 entweicht. Es ist günstig, den Kompressor 47 weiter mit einer programmierbaren Steuerung 51 zu versehen, durch welche der Luftdruck in der Überdruckzone 47 laufend vorbestimmt verändert werden kann, mit der Folge, dass der Volumenstrom des durch die Leitung 43 fliessenden Frischbetons ebenfalls vorbestimmt ändert. Dies erlaubt, die Füllgeschwindigkeit v_{F} (d.h. die Geschwindigkeit, mit welcher der Pegel P des Frischbetons in der Form 41 nach oben steigt) auf deren Querschnittsveränderungen, bzw. auf diejenigen des zu füllenden Hohlraums 52 abzustimmen. Bevorzugt wird die Füllgeschwindigkeit v_{F} über die Querschnittsveränderungen der Form 41 konstant gehalten.

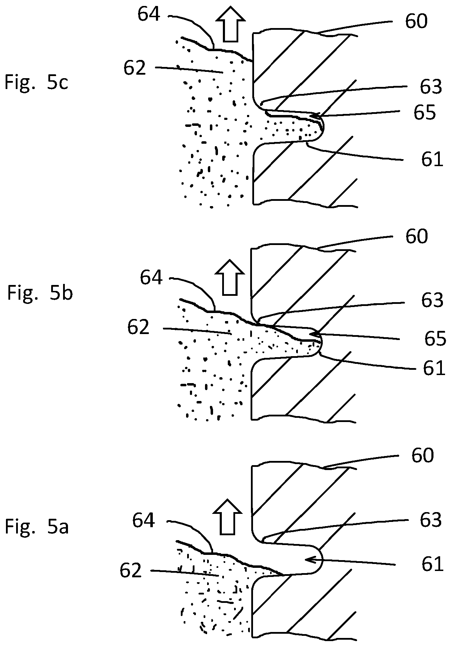

Zusammenfassend ist ein Kessel günstig, der ausgebildet ist, während der Ausgabe einer Charge Frischbeton dessen Volumenstrom vorbestimmt zu ändern, wobei er bevorzugt einen mit einem Ausgabekanal verbundenen Frischbetonbehälter und eine Anordnung für die Erzeugung von Überdruck im Frischbetonbehälter, bevorzugt durch Luft, aufweist, und wobei die Anordnung ausgebildet ist, den Überdruck während der Ausgabe einer Charge Frischbeton laufend zu ändern, derart, dass sich der Volumenstroms des ausgegebenen Betons einem aktuellen Soll-Wert entsprechend ändert. Zur Bestimmung des aktuellen Soll-Werts für den Volumenstrom s. unten zu Fig 5a bis 5c.

Das neben der Form 41 in der Figur gezeigte Diagramm 55 zeigt auf der vertikalen Achse die Höher h der Form 41 und auf der horizontalen Achse die Fliessgeschwindigkeit v_{FB} des durch die Leitung 43 fliessenden Frischbetons 42. Die Kurve 56 zeigt qualitativ die Fliessgeschwindigkeit v_{FB} für den Fall einer konstanten Füllgeschwindigkeit v_{F}.

Ersichtlich ist, dass bei einem Pegelstand P des Frischbetons 42 noch im Einlass 47(Höhe h_{E}) die Fliessgeschwindigkeit v_{FB} minimal ist und einen Wert vₘᵢₙ aufweist. Hat der Pegel P den Hohlraum 52 erreicht, d.h. verbreitert sich der Querschnitt der Form, damit muss die Fliessgeschwindigkeit v_{FB} kontinuierlich zunehmen, damit Füllgeschwindigkeit v_{F} konstant bleibt (besitzt auf der Höhe h_{X} einen allgemeinen Wert vₓ) wobei auf der Höhe h_{D} (dem maximal weiten Querschnitt der Form 41) der maximale Wert vₘₐₓ erreicht ist.

Danach sinkt die Fliessgeschwindigkeit v_{FB} dem sich verringernden Querschnitt entsprechend laufend ab, bis sie wiederum beim Auslass 48 (Höhe h_{A}) den minimalen Wert vₘᵢₙ erreicht, mit welchem weiter ein Teil des Auslass 48 gefüllt wird, um sicherzustellen, dass die Form 41 vollständig verfüllt ist. Danach (auf der Höhe h_{S}) wird die Fliessgeschwindigkeit v_{FB} gestoppt, da die Charge Beton in die Form 41 verfüllt ist.

Der Kessel ist somit ausgebildet, während der Ausgabe einer Charge Frischbeton dessen Volumenstrom vorbestimmt zu ändern, wobei mit Hilfe solch eines Kessels bevorzugt, der Frischbeton mit unterschiedlicher Fliessgeschwindigkeit v_{FB} die Form injiziert wird, derart, dass sich die Form über Querschnittsänderungen der Form mit einer vorbestimmten, bevorzugt im Wesentlichen konstanten Fliessgeschwindigkeit v_{FB} füllt, wobei weiter bevorzugt die Injektion des Frischbetons durch Überdruck erfolgt und die Flussgeschwindigkeit durch eine Veränderung des Überdrucks gesteuert wird.

In Figur 3a ist die Rippenstruktur der unteren Formhälfte 22 ersichtlich. Steigt nun der Pegel P von in die vertikal ausgerichtete Form 20 injiziertem Frischbeton vom Einlass 23 zum Auslass 24 nach oben, wechselt der Querschnitt der Form 20 laufend, was für eine konstante Füllgeschwindigkeit v_{F} eine laufende Anpassung der Fliessgeschwindigkeit v_{FB} bedingt. Dabei kann der Hohlraum der Form 20 in horizontale Querschnitte zerlegt und die Füllgeschwindigkeit v_{F} der Fläche der Querschnitte entsprechend bestimmt werden. Werden beispielsweise 500 oder 1000 Querschnitte vorgesehen, ergibt sich eine fein gestufte Änderung des Querschnitts und damit der Fliessgeschwindigkeit v_{FB}. Dadurch lässt sich die Steuerung 51 (Figur 4) entsprechend programmieren und der Druck in der Überdruckzone 46 durch eine PID Regler derart regeln, dass die reale Fliessgeschwindigkeit v_{FB} zu einer im Wesentlichen konstanten realen Füllgeschwindigkeit v_{F} der Form 20 führt. Der Fachmann kann im konkreten Fall anhand des Hohlraums der zu verwendenden Form die Anzahl der Querschnitte sowie das geeignete Reglermodell leicht festlegen.

Figuren 5a bis 5c zeigen einen Ausschnitt aus einer Form 60 mit einer Höhlung 61 für eine zu vergiessenden Rippe während der Füllung der Form 60 mit Frischbeton 62. Die Höhlung 61 ist an ihrem oberen Ende begrenzt durch eine gerundete Kante 63. Die Oberfläche 64 des Frischbetons 62 steigt in Pfeilrichtung nach oben, und fällt auf Grund der vergleichsweise hohen Viskosität des Frischbetons gegen die Wand der Form 60 hin ab.

Figur 5a zeigt den Moment, in welchem der Pegelstand des Frischbetons 62 den Ort der Höhlung 61 erreicht hat und Frischbeton 62 in diese eindringt. Mit weiter steigendem Pegelstand, und bei zu hoher Füllgeschwindigkeit, ergibt sich die Situation nach Figur 5b, in welcher die Oberfläche 64 die gerundete Kante 63 der Form berührt und damit eine Luftblase 65 im Hintergrund der Höhlung 61 einschliesst. Figur 5c zeigt die Situation etwas später. Die Luftblase 65 ist etwas komprimiert, verhindert aber definitiv, dass die Höhlung 61 vollständig mit Frischbeton 62 gefüllt werden kann.

Es ergibt sich, dass bei zu hoher Füllgeschwindigkeit die eine Flanke der Rippe des zu giessenden Betonwerkstücks für die Hydratation nicht and der Wand der Form 60 anliegen kann, was zu einem Fehler im Werkstück betreffend dessen Geometrie und betreffend dessen Masshaltigkeit führt. Steigt nun der der Pegelstand des Betons so langsam, dass sich die Höhlung 61 vollständig mit Frischbeton 62 füllen kann, bevor dessen Oberfläche 64 diese im Kontakt mit der gerundeten Kante 63 verschliesst, entsteht der Giessfehler nicht. Daraus folgt, dass es in Verbindung mit der geometrischen Struktur der Form eine maximale zulässige Füllgeschwindigkeit v_{F} gibt. Je nach dieser geometrischen Struktur ist die maximale Füllgeschwindigkeit v_{F} dieselbe oder für verschiedene Bereiche der Form verschieden. Der Fachmann kann das Geschwindigkeitsprofil der Füllgeschwindigkeit v_{F} (konstant oder vorbestimmt variabel) anhand einer konkreten Form und des zu vergiessenden Frischbetons leicht bestimmen. Vorteilhaft ist bei der Anpassung Füllgeschwindigkeit v_{F}, dass damit die Form im Hinblick auf eine bestimmte Betonmischung maximal schnell gefüllt werden kann, was einen effizienten Produktionsprozess unterstützt.

Erfindungsgemäss wird ein masshaltiges Betonwerkstück wie beispielsweise ein Betonträger 10 (Figuren 2a bis 2c) für eine reflektierende Schicht hergestellt,
▪ indem eine vollverschlossene, in in einer vorbestimmten Geometrie masshaltigen Form vollständig mit Frischbeton verfüllt wird, beispielsweise die Form 20 oder 41 gemäss den Figuren 3b oder 4. Der Frischbeton kann beispielsweise ein herkömmlicher Faserbeton sein, wie er vom Fachmann je nach dem vorgesehenen Einsatzzweck gewählt wird. Die vollverschlossene Form stellt wie oben erwähnt sicher, dass der Frischbeton über seine ganze Oberfläche temperaturkontrolliert ist und auch kein die gewollte, kontrollierte Hydratation störender Feuchtigkeitsaustausch mit der Umgebung stattfinden kann.
▪ Dabei wird während der anschliessenden und ungestört verlaufenden Hydratation eine vorbestimmte Temperaturverteilung der den hydratisierenden Beton umschliessenden Wände der Form gefahren. Dadurch ergibt sich eine vorbestimmte Temperaturverteilung im Inneren des hydratisierenden Betonkörpers, wodurch bleibende geometrische Verzerrungen vermieden werden, und neben dieser Temperaturkontrolle durch die ungestört verlaufende Hydratation auch andere, beispielsweise mechanisch hervorgerufene, geometrische Verzerrungen vermieden sind.
▪ Schliesslich wird das Betonwerkstück bei einer Druckfestigkeit von mehr als 10 MPa entformt, also mit einer Druckfestigkeit für genügende Stabilität beim durch den Fachmann sorgfältig vorgenommenen Entschalen, womit wiederum geometrische Verzerrungen vermieden werden.
▪ Dabei weist das Grösstkorn des Frischbetons einen Durchmesser von weniger als 20% der kleinsten Abmessung der Form auf. Die Wärmeleitfähigkeit des im Beton vorhandenen Korns unterscheidet sich von derjenigen des Zements, so dass im Bereich von Zuschlagstoffen Zonen mit inhomogener Wärmeverteilung entstehen, welche die gewünschte vorbestimmte Temperaturverteilung im hydratisierenden Betonwerkstück stören kann. Dieser Effekt hängt von den lokalen Abmessungen des herzustellenden Betonwerkstücks ab: Versuche der Anmelderin haben ergeben, dass unerwünschte, die Masshaltigkeit des Betonwerkstücks reduzierende geometrische Verzerrungen während der Hydratation unterbleiben, wenn der Durchmesser des Grösstkorns 20% der kleinsten Abmessung der Form nicht erreicht.

Erfindungsgemäß wird die Temperaturverteilung der Wände der Form derart eingestellt, dass die Temperaturverteilung im hydratisierenden Beton vom Beginn der Hydratisierung bis zur Entschalung innerhalb eines erlaubten Intervalls von 15 °C, bevorzugt von 10 °C, besonders bevorzugt von 5 ⁰C liegt. Grundsätzlich ist bei einer Temperaturkontrolle des hydratisierenden Betons durch die Wände der Form ein Temperaturgradient im Beton nicht zu vermeiden. Der Fachmann kann durch Versuch mit einer konkreten Betonmischung leicht feststellen, welcher Temperaturgradient aktuell zulässig ist oder nicht. Versuche der Anmelderin haben gezeigt, dass eine Massgenauigkeit von +/- 25 Mikrometer pro Meter Abmessung des Betonwerkstücks ohne Weiteres erreichbar ist, wenn die zu einem Zeitpunkt höchste und tiefste Temperatur im hydratisierenden Beton nicht mehr als 5°C auseinander liegen, d.h. die Temperaturverteilung im Beton innerhalb eines erlaubten Intervalls von 5 °C verbleibt. Für eine geringere Massgenauigkeit von +/- 50 Mikrometer pro Meter kann, je nach der verwendeten Betonmischung, ein Temperaturintervall von 10 ⁰C oder von 15 ⁰C genügen, was sich durch den Fachmann leicht über einfache Versuche feststellen lässt.

Für eine schnelle Fertigung der Betonwerkstücke kann erfindungsgemäss das hydratisierende Betonwerkstück einem Temperaturprofil entlang gefahren, d.h. dessen Temperatur beispielsweise zur Beschleunigung der Hydratation erhöht werden. Natürlich wird diese Temperaturprofil durch die Temperatur der Kontaktflächen der Wände der Form mit dem Beton erzeugt. Bevorzugt werden während dem Durchfahren des Temperaturprofils die oben erwähnten, erlaubten Temperaturintervalle eingehalten. Besonders bevorzugt wird im Sinn der effizienten Fertigung dabei die Erhöhung der Temperatur im Beton derart vorgenommen, dass sich der Beton schnellst möglichst erwärmt, aber dessen Temperaturverteilung stets im erlaubten Intervall von 5 ⁰C, 10 ⁰C oder 15 ⁰C bleibt. Auch hier lässt sich durch Versuche leicht bestimmen, welches die schnellst möglichste solche Erwärmung im Fall einer bestimmten Betonmischung ist, beispielsweise dadurch, dass für den Versuch die Form mit Thermofühlern versehen wird, um die herum der Beton vergossen wird.

Bevorzugt kann beispielsweise für die Herstellung von Betonträgern 10 (Figuren 2a bis 2c) das Temperaturprofil eine Erhöhung der Temperatur im Beton innerhalb von 2 Stunden von 25 °C auf 45 °C , dann halten dieser Temperatur und schliesslich eine Absenkung der Temperatur innerhalb von 3 Stunden von 45 °C auf wieder 25 °C vorsehen.

Natürlich kann der Fachmann eine schwindkompensierte Betonmischung vorsehen, den Schwund kompensierende Zusätze sind im Stand der Technik bekannt. Dadurch wird verhindert, dass in der masshaltigen Form durch Schwinden während der Hydratation nicht abbaubare geometrische Verzerrungen entstehen. Andererseits ist es ebenfalls erfindungsgemäss, in einem Temperaturprofil die thermische Expansion auf das Schwinden abzustimmen: dann sieht das Temperaturprofil eine Erhöhung der Temperatur des hydratisierenden Betons derart vor, dass dessen thermische Expansion das Schwinden im Wesentlichen kompensiert. Damit geht einher, dass die Form einen kleineren Wärmedehnungskoeffizienten α_{T} aufweist, als der Beton, und dass dann das Werkstück auf einer hohen Temperatur entschalt wird und frei abkühlt, um geometrische Verzerrungen auf Grund der thermischen Schrumpfung zu vermeiden. Der Fachmann kann im konkreten Fall Material und Geometrie der Form, die Betonmischung und das Temperaturprofil auf einander abstimmen.

Unabhängig von der kleinsten Abmessung der Form wird bevorzugt ein Grösstkorn mit einem Durchmesser von weniger als 1 mm, besonders bevorzugt weniger als 0,5 mm verwendet, um auch unabhängig von der verwendeten Betonmischung einwandfreie Masshaltigkeit, insbesondere bei während der Hydratation gefahrenen Temperaturprofilen, zu erreichen.

Anstelle einer Form gemäss den Figuren 3 und 4 mit einem Temperaturmodul (oder einer anderen geeigneten Kühlung bzw. Heizanordnung) kann auch eine Form verwendet werden, deren Masse mehr als das Dreifache, bevorzugt mehr als das Vierfache, besonders bevorzugt mehr als das Fünffache der Masse des in ihr bei vollständiger Füllung vorhandenen Frischbetons beträgt. Dadurch kann die Form die Wärme des hydratisierenden Betons aufnehmen, ohne dass sie selbst während der Hydratation aktiv gekühlt werden muss und entsprechend einfach und günstig hergestellt und betrieben werden.

Am Beispiel eines Betonträgers 10 (Figuren 2a bis 2c) sei kurz das erfindungsgemässe Verfahren dargestellt:
Nach der vorbereitenden Reinigung wird eine Form 20 auf 25 °C erwärmt, zugleich der Frischbeton durch das Mischen seiner Bestandteile zubereitet. Die viskose Masse des Frischbetons enthält durch den Mischvorgang Luftblasen, welche bevorzugt in einer Unterdruckkammer aus dem Beton entfernt werden, der in der Unterdruckkammer verbleibende Restdruck beträgt bevorzugt 150 mbar, besonders bevorzugt 50 mbar. Der Fachmann kann auch hier für die konkrete Betonmischung die Dauer der Unterdruckbehandlung festlegen. Luftblasen bewirken Inhomogenitäten in der Temperaturverteilung der hydratisierenden Betonmischung und behindern die gewünschte, homogene Gefügeumwandlung, weshalb für einwandfreie Masshaltigkeit des Betonwerkstücks eine blasenfreie Betonmischung bevorzugt ist.

Die blasenreduzierte oder blasenfreie Betonmischung wird danach in die Form injiziert, die im Fall einer Geometrie wie derjenigen der Form 20 dafür in vertikale Position gebracht worden ist, was die einwandfreie Füllung erleichtert. Nach vollständiger Füllung der Form wird diese bevorzugt wieder in horizontale Position gebracht, wobei die obere Hälfte 21 (Figur 3a) jedoch unten liegt, so dass die masshaltige Oberfläche 25 (Figur 3a) durch das Eigengewicht des Betons von diesem besonders gut beaufschlagt und so die Wahrscheinlichkeit für allfällige Fehlstellen an der Oberfläche 12 des Betonträgers (Figur 2a) noch einmal reduziert ist.

Nach 24 Stunden Hydratationszeit wird der Betonträger entschalt und die durch die vollständige Füllung der Form bedingten Gusszapfen, die vom Zuführkanal 23 und Auslasskanal 24 (Figur 3a) stammen, maschinell entfernt. Schliesslich folgt noch zur vollständigen Hydratation eine Lagerung im Wasser bei 90 °C für 72 Stunden.

Zusammenfassend ist erfindungsgemäss ein Betonwerkstück, mit einer konkaven Oberfläche, die geometrisch einen Brennbereich von 10 mrad oder weniger, bevorzugt 4 mrad oder weniger, ganz bevorzugt 1 mrad oder weniger erzeugt, wobei die Oberfläche weiter bevorzugt in zwei Dimensionen konkav gekrümmt ist. Mit anderen Worten ist es so, dass natürlich nicht nur zweidimensional gekrümmte Oberflächen mit der gemäss der vorliegenden Erfindung realisierbaren Genauigkeit hergestellt werden können - für jeden denkbaren Zweck.

Werden erfindungsgemäss Betonwerkstücke in Serie hergestellt, sind diese formgleich ausgebildet, wobei jeweils gleiche geometrische Abmessungen innerhalb einer Toleranz von +/- 50 × 10⁻⁶, bevorzugt +/- 25 × 10⁻⁶ m pro m der Abmessung des Werkstücks liegen.

## Patentansprüche

1. Verfahren zum Herstellen eines masshaltigen Betonwerkstücks, **dadurch gekennzeichnet, dass** für die Herstellung des Betonwerkstücks eine vollverschlossene in einer vorbestimmten Geometrie masshaltigen Form vollständig mit Frischbeton verfüllt wird, während der anschliessenden und ungestört verlaufenden Hydratation eine vorbestimmte Temperaturverteilung der den hydratisierenden Beton umschliessenden Wände der Form gefahren und das Betonwerkstück bei einer Druckfestigkeit von mehr als 10 MPa entformt wird, wobei das Grösstkorn des Frischbetons einen Durchmesser von weniger als 20% der kleinsten Abmessung der Form aufweist. **dadurch gekennzeichnet, dass** die Temperaturverteilung der Wände der Form derart eingestellt wird, dass die Temperaturverteilung im hydratisierenden Beton vom Beginn der Hydratisierung bis zur Entschalung innerhalb eines erlaubten Intervalls von 15 ° liegt.

2. Verfahren nach Anspruch 1, wobei das erlaubte Intervall 10 °C, bevorzugt 5 °C beträgt.

3. Verfahren nach Anspruch 1, wobei der Beton während der Hydratation einem Temperaturprofil entlanggefahren wird, das durch eine Temperaturänderung der Kontaktflächen der Wände der Form mit dem Beton erzeugt wird.

4. Verfahren nach Anspruch 1, wobei das Temperaturprofil eine Erhöhung der Temperatur im Beton einschliesst, derart, dass sich der Beton schnellst möglichst erwärmt, aber dessen Temperaturverteilung stets im erlaubten Intervall bleibt.

5. Verfahren nach Anspruch 1, wobei das Temperaturprofil eine Erhöhung der Temperatur im Beton innerhalb von 2 Stunden von 25 °C auf 45 °C , dann halten dieser Temperatur und schliesslich eine Absenkung der Temperatur innerhalb von 3 Stunden von 45 °C auf wieder 25 °C vorsieht.

6. Verfahren nach Anspruch 1, wobei das Temperaturprofil eine Erhöhung der Temperatur des hydratisierenden Betons derart vorsieht, dass dessen thermische Expansion das Schwinden im Wesentlichen kompensiert

7. Verfahren nach Anspruch 1, wobei das Grösstkorn einen Durchmesser von weniger als 1 mm +/- 3%, bevorzugt weniger als 0,5 mm +/- 3% aufweist.

8. Verfahren nach Anspruch 1, wobei die Form im Wesentlichen denselben Wärmedehnungskoeffizienten α_{T} wie der in sie zu vergiessende Beton aufweist.

9. Verfahren nach Anspruch 1, wobei der Frischbeton vor dem Vergiessen in die Form unter Unterdruck gesetzt wird, der bevorzugt 150 mbar, bevorzugt 50 mbar, beträgt

10. Verfahren nach Anspruch 1, wobei der Frischbeton mit unterschiedlicher Fliessgeschwindigkeit v_{FB} die Form injiziert wird, derart, dass sich die Form über Querschnittsänderungen der Form mit einer vorbestimmten, bevorzugt im Wesentlichen konstanten Füllgeschwindigkeit v_{F} füllt, wobei weiter bevorzugt die Injektion des Frischbetons durch Überdruck erfolgt und die Fliessgeschwindigkeit v_{FB} durch eine Veränderung des Überdrucks gesteuert wird.

11. Betonwerkstück, hergestellt nach dem Verfahren von Anspruch 1, mit einer konkaven Oberfläche, die ohne Nachbearbeitung nach dem Herstellverfahren geometrisch einen Brennbereich von 10 mrad oder weniger, bevorzugt 4 mrad oder weniger, ganz bevorzugt 1 mrad oder weniger

12. Betonwerkstück nach Anspruch 11, wobei die Oberfläche weiter in zwei Dimensionen konkav gekrümmt ist.

13. Betonwerkstücke, hergestellt nach dem Verfahren von Anspruch 1, **dadurch gekennzeichnet, dass** sie formgleich ausgebildet sind und ohne Nachbearbeitung nach dem Herstellverfahren jeweils gleiche geometrische Abmessungen innerhalb einer Toleranz von +/- 50 × 10⁻⁶ m pro m der Abmessung des Werkstücks liegen.

14. Betonwerkstücke nach Anspruch 13, wobei jeweils gleiche geometrische Abmessungen innerhalb einer Toleranz von +/- 25 × 10⁻⁶ m pro pro m der Abmessung des Werkstücks liegen.

## Claims

1. Method for producing a dimensionally stable concrete workpiece , **characterized in that**, for the production of the concrete workpiece, a fully closed mould with a predetermined geometry is completely filled with fresh concrete, during the subsequent and undisturbed hydration, a predetermined temperature distribution of the walls of the mould surrounding the hydrating concrete is maintained and the concrete workpiece is demoulded at a compressive strength of more than 10 MPa, whereby the largest grain of the fresh concrete having a diameter of less than 20% of the smallest dimension of the mould, **characterized in that** the temperature distribution of the walls of the mould is set in such a way that the temperature distribution in the hydrating concrete from the start of hydration to demoulding is within a permissible interval of 15⁰ .

2. Method according to claim 1, wherein the permitted interval is 10⁰ C, preferably 5⁰ C.

3. Method according to claim 1, wherein the concrete is moved along a temperature profile during hydration, which is generated by a temperature change of the contact surfaces of the walls of the mold with the concrete.

4. Method according to claim 1, wherein the temperature profile includes an increase in the temperature in the concrete such that the concrete heats up as quickly as possible, but its temperature distribution always remains within the permitted interval.

5. Method according to claim 1, wherein the temperature profile provides for an increase in the temperature in the concrete from 25° C to 45° C within 2 hours, then maintaining this temperature and finally a reduction in the temperature from 45° C to 25° C again within 3 hours.

6. Method according to claim 1, wherein the temperature profile provides for an increase in the temperature of the hydrating concrete such that its thermal expansion substantially compensates for shrinkage

7. Method according to claim 1, wherein the largest grain has a diameter of less than 1 mm +/- 3%, preferably less than 0.5 mm +/- 3%.

8. Method according to claim 1, wherein the mold has essentially the same coefficient of thermal expansion α_{T} as the concrete to be poured into it.

9. Method according to claim 1, wherein the fresh concrete is placed under negative pressure, which is preferably 150 mbar, preferably 50 mbar, before pouring into the mold

10. Method according to claim 1, wherein the fresh concrete is injected into the mold at different flow rates v_{FB} such that the mold fills at a predetermined, preferably substantially constant filling rate v_{F} via changes in the cross-section of the mold, wherein further preferably the injection of the fresh concrete is effected by overpressure and the flow rate v_{FB} is controlled by a change in the overpressure.

11. Concrete workpiece manufactured according to the method of claim 1, having a concave surface which, without reworking after the manufacturing process, geometrically has a firing range of 10 mrad or less, preferably 4 mrad or less, most preferably 1 mrad or less

12. Concrete workpiece according to claim 11, wherein the surface is further concavely curved in two dimensions.

13. Concrete workpieces manufactured according to the process of claim 1, **characterized in that** they are of identical shape and, without reworking after the manufacturing process, each have identical geometric dimensions within a tolerance of +/- 50 × 10⁻⁶ m per m of the dimension of the workpiece.

14. Concrete work pieces according to claim 13, wherein identical geometric dimensions are within a tolerance of +/- 25 × 10⁻⁶ m per m of the dimension of the workpiece.

## Revendications

1. Procédé de fabrication d'une pièce en béton de dimensions exactes, **caractérisé en ce que**, pour la fabrication de la pièce en béton, on remplit entièrement de béton frais un moule de dimensions exactes, entièrement fermé, d'une géométrie prédéterminée, pendant l'hydratation qui suit et qui se déroule sans perturbation, une répartition de température prédéterminée des parois du moule entourant le béton hydratant est conduite et la pièce en béton est démoulée à une résistance à la compression de plus de 10 MPa, le plus gros grain du béton frais présentant un diamètre inférieur à 20% de la plus petite dimension du moule. **caractérisé en ce que** la distribution de température des parois du moule est ajustée de telle sorte que la distribution de température dans le béton hydratant, du début de l'hydratation jusqu'au démoulage, se situe dans un intervalle autorisé de 15°.

2. Procédé selon la revendication 1, dans lequel l'intervalle autorisé est de 10° C, de préférence 5⁰ C.

3. Procédé selon la revendication 1, dans lequel, pendant l'hydratation, le béton est déplacé le long d'un profil de température créé par une variation de température des surfaces de contact des parois du moule avec le béton.

4. Procédé selon la revendication 1, dans lequel le profil de température comprend une augmentation de la température dans le béton, de telle sorte que le béton se réchauffe le plus rapidement possible, mais que sa répartition de température reste toujours dans l'intervalle autorisé.

5. Procédé selon la revendication 1, dans lequel le profil de température prévoit une augmentation de la température dans le béton en l'espace de 2 heures de 25° C à 45° C, puis un maintien de cette température et enfin un abaissement de la température en l'espace de 3 heures de 45° C à nouveau 25° C.

6. Procédé selon la revendication 1, dans lequel le profil de température prévoit une augmentation de la température du béton hydratant de telle sorte que son expansion thermique compense sensiblement le retrait

7. Procédé selon la revendication 1, dans lequel le grain le plus gros présente un diamètre inférieur à 1 mm +/- 3%, de préférence inférieur à 0,5 mm +/- 3%.

8. Procédé selon la revendication 1, dans lequel le moule présente sensiblement le même coefficient de dilatation thermique α_{T} que le béton à couler dans celui-ci.

9. Procédé selon la revendication 1, dans lequel le béton frais, avant d'être coulé dans le moule, est mis sous une dépression qui est de préférence de 150 mbars, de préférence de 50 mbars.

10. Procédé selon la revendication 1, dans lequel le béton frais est injecté dans le moule avec une vitesse d'écoulement variable v_{FB}, de telle sorte que le moule se remplit par des modifications de la section transversale du moule avec une vitesse de remplissage prédéterminée, de préférence sensiblement constante v_{F}, l'injection du béton frais s'effectuant en outre de préférence par surpression et la vitesse d'écoulement v_{FB} étant commandée par une modification de la surpression.

11. Pièce en béton fabriquée selon le procédé de la revendication 1, avec une surface concave qui, sans retouche après le procédé de fabrication, présente géométriquement une zone de cuisson de 10 mrad ou moins, de préférence de 4 mrad ou moins, de manière tout à fait préférée de 1 mrad ou moins

12. Pièce en béton selon la revendication 11, dans laquelle la surface est en outre incurvée de manière concave dans deux dimensions.

13. Pièces en béton fabriquées selon le procédé de la revendication 1, **caractérisées en ce qu'**elles sont de forme identique et qu'elles présentent, sans traitement ultérieur selon le procédé de fabrication, des dimensions géométriques respectivement identiques dans une tolérance de +/- 50 × 10⁻⁶ m par m de la dimension de la pièce.

14. Pièces en béton selon la revendication 13, dans lesquelles des dimensions géométriques identiques se situent dans une tolérance de +/- 25 x 10⁻⁶ m par m de la dimension de la pièce.
